# DEMANDE DE BREVET EUROPEEN

(11) **EP 1 612 161 A1**
(43) Date de publication de la demande: **04.01.2006**
(21) Numéro de dépôt: 05105473.2
(22) Date de dépôt: 21.06.2005
(51) Int. Cl.: B65D 85/48, B65G 49/06

(54) **Dispositif pour supporter et transporter des feuilles rigides**

(30) Priorité: 28.06.2004 BE 200400320
(71) Demandeur: GLAVERBEL, 1170 Bruxelles (BE)
(72) Inventeur: PLATTEEUW, Pierre, 6040, Jumet (BE); DAVISTER, Serge, 6040, Jumet (BE)
(74) Mandataire: Decamps, Alain René François

(57) **Abrégé**

Organe de ceinturage d'au moins un paquet de feuilles rigides, comprenant, d'une part, un support en L qui comprend un longeron sensiblement horizontal (2) et un longeron sensiblement vertical (1) et, d'autre part, au moins un bras (3) articulé au longeron horizontal (2) du support et muni d'une bielle (5).

Dispositif de manutention de paquets de feuilles rigides, associant au moins deux organes de ceinturage desdits paquets, formant avec ceux-ci une palette de feuilles rigides.

## Description

### Domaine de l'invention

L'invention se rapporte à la manutention de feuilles rigides, particulièrement des feuilles rigides de grandes dimensions, telles que des planches, des feuilles de verre ou des feuilles en polymère de synthèse.

L'invention concerne plus particulièrement un organe pour le ceinturage de paquets de telles feuilles, en prévision de leur manutention.

### Etat de la technique

Les feuilles de verre destinées à l'industrie du bâtiment sont généralement transportées par paquets en position verticale dans des véhicules appropriés (camions, péniches, wagons ferroviaires). Pour les protéger contre les chocs et éviter leur détérioration les paquets de feuilles de verre sont généralement emprisonnés dans des palettes en bois ou dans des dispositifs métalliques de manutention appropriés.

Dans le document FR-2 318 074, on décrit un dispositif pour la manutention d'un paquet de feuilles de verre, ce dispositif comprenant une ceinture rectangulaire verticale, formée par l'assemblage de deux structures métalliques complémentaires en L. L'une des structures est un support en L, servant à supporter le paquet de feuille de verre en position sensiblement verticale ou légèrement inclinée. A cet effet, elle comprend un longeron sensiblement horizontal, sur lequel le paquet de feuilles repose par sa tranche, et un longeron sensiblement vertical contre lequel le paquet de feuilles de verre prend appui. L'autre structure est formée d'un barreau vertical et d'un barreau horizontal, soudés en équerre. Pour ceinturer le paquet de feuilles de verre sur le support en L, on attache le barreau vertical et le barreau horizontal de l'équerre respectivement au longeron horizontal et au longeron vertical du support en L, de manière que le paquet de feuilles de verre soit pris en sandwich entre le longeron vertical du support et le barreau vertical de la structure en équerre. Pour le transport d'un paquet de feuilles de verre, celui-ci est généralement ceinturé par deux organes de ceinturage semblables. A cet effet, on dispose d'abord deux supports en L à intervalle déterminé sur un véhicule, on dépose le paquet de feuilles de verre en position sensiblement verticale sur les longerons horizontaux de ces deux supports et on assemble ensuite une structure en équerre sur chacun des deux supports en L, de manière à ceinturer le paquet de feuilles de verre.

L'organe de ceinturage du document FR-2 318 074 présente l'inconvénient de nécessiter deux structures complémentaires indépendantes (un support en L et une structure de serrage en équerre), dont le stockage et l'assemblage peuvent présenter des difficultés. L'utilisation de cet organe de ceinturage connu est peu commode pour le chargement de paquets de feuilles de verre sur un véhicule (tel que la cale d'une péniche ou le fond plat d'un camion ou d'un wagon ferroviaire), notamment à cause du grand encombrement qu'occasionne l'assemblage des structures en équerre sur les supports en L. Cet encombrement nuit à la capacité de chargement des véhicules et il augmente le risque de détérioration des paquets de feuilles de verre en cours de chargement.

### Résumé de l'invention

L'invention vise à remédier aux inconvénients des organes de ceinturage connus, décrits plus haut, en fournissant un organe de ceinturage nouveau et amélioré pour la manutention de paquets de feuilles rigides, dont l'encombrement est réduit, dont la manutention et le stockage sont facilités et qui permettent une utilisation optimale de la capacité de chargement des véhicules.

En conséquence, l'invention concerne un organe de ceinturage d'au moins un paquet de feuilles rigides, comprenant, d'une part, un support en L qui comprend un longeron sensiblement horizontal et un longeron sensiblement vertical et, d'autre part, au moins un bras mobile sur ledit support, l'organe de ceinturage se caractérisant en ce que le bras est articulé au longeron horizontal du support et en ce qu'une articulation du bras au longeron horizontal comprend une bielle.

L'organe de ceinturage selon l'invention a pour fonction de ceinturer un ou plusieurs paquets de feuilles en position sensiblement verticale ou légèrement inclinée, de manière à compresser les feuilles du ou de chaque paquet les unes contre les autres.

Le support en L est un support rigide. Il doit être conçu pour supporter le paquet de feuilles, sans se déformer. Il peut être en toute matière adéquate, par exemple en bois, en métal ou en polymère de synthèse. Le choix de la matière la plus adéquate n'est pas critique pour la définition de l'invention. Elle va dépendre des dimensions des feuilles, de leur poids et du poids du paquet de feuilles. Dans le cas de feuilles de verre, on utilise de préférence des supports métalliques, généralement en acier.

Le longeron sensiblement horizontal du support a pour fonction de supporter le paquet de feuilles en position sensiblement verticale ou légèrement inclinée, celles-ci reposant sur ce longeron horizontal par leur tranche. Le longeron sensiblement vertical du support en L sert d'appui au paquet de feuilles lorsque celui-ci repose sur le longeron horizontal.

Dans la suite du présent mémoire, l'expression « longeron sensiblement horizontal » doit être interprétée dans un sens large et concerne indifféremment un longeron rigoureusement horizontal ou un longeron légèrement incliné sur l'horizontale. L'expression « légèrement incliné sur l'horizontale » désigne un angle inférieur à 90 degrés par rapport à l'horizontale. L'angle d'inclinaison est généralement inférieur à 45 degrés et il excède rarement 25 degrés. Les angles d'inclinaison de 5 à 15 degrés conviennent généralement bien.

De manière similaire, l'expression « longeron sensiblement vertical » doit être interprétée dans un sens large et concerne indifféremment un longeron rigoureusement vertical ou un longeron légèrement incliné par rapport à la verticale. L'expression « légèrement incliné par rapport à la verticale » désigne un angle inférieur à 90 degrés par rapport à la verticale. L'angle d'inclinaison est généralement inférieur à 45 degrés et il excède rarement 25 degrés. Les angles d'inclinaison de 5 à 15 degrés conviennent généralement bien. Les angles d'inclinaison du longeron horizontal et du longeron vertical doivent par ailleurs être choisis de manière à assurer une position d'équilibre stable du paquet de feuilles sur le support en L.

Par la suite, pour une raison de clarté et de simplification, les adjectifs « horizontal » et « vertical » seront utilisés en lieu et place respectivement des expressions « sensiblement horizontal » et « sensiblement vertical » définies plus haut.

En pratique le longeron vertical et le longeron horizontal du support sont habituellement perpendiculaires, bien que cela ne soit pas une condition limitative de la portée de l'invention.

Le bras de l'organe de ceinturage selon l'invention est destiné à être appliqué contre le paquet de feuilles rigides, pour serrer celui-ci contre le longeron vertical du support en L. Il est rigide et peut être en toute matière adéquate capable de réaliser cette fonction, par exemple en bois, en métal ou en polymère de synthèse. Le choix de la matière la plus adéquate n'est pas critique pour la définition de l'invention. Elle va dépendre des dimensions des feuilles, de leur poids et du poids du paquet de feuilles. Dans le cas de feuilles de verre, on utilise de préférence des bras métalliques, généralement en acier.

Conformément à l'invention, le bras est articulé au longeron horizontal du support en L au moyen d'une bielle. L'écart entre le longeron vertical du support en L et le point d'articulation du bras au longeron horizontal dudit support en L doit être au moins suffisant pour permettre l'insertion d'un paquet de feuilles sur le longeron horizontal, entre le longeron vertical et le bras. Ledit écart est généralement sensiblement égal à l'épaisseur du paquet de feuilles, pour permettre que celui-ci soit correctement pris en sandwich entre le bras et le longeron vertical du support en L.

L'organe de ceinturage selon l'invention constitue un ensemble unitaire, ce qui est un avantage par rapport à l'organe de ceinturage connu décrit plus haut. Pour charger et ceinturer un paquet de feuilles rigides dans l'organe de ceinturage selon l'invention, on fait pivoter le bras sur son articulation, pour l'écarter du longeron vertical du support en L, on engage le paquet de feuilles rigides en position verticale entre le bras et le longeron vertical du support en L et on le fait reposer en position sensiblement verticale contre le longeron vertical du support en L. Dans cette position, les feuilles de verre reposent par la tranche sur le longeron horizontal du support en L et sont sensiblement verticales. Les expressions « verticale » et « sensiblement verticale » ont été définies plus haut. Après avoir disposé le paquet de feuilles rigides sur le longeron horizontal du support en L, on fait pivoter le bras sur son pivot pour prendre le paquet de feuilles en sandwich entre le bras et le longeron vertical du support en L.

L'organe de ceinturage selon l'invention comprend idéalement un moyen de retenue du bras contre le paquet de feuilles rigides. Ce moyen n'est pas critique pour la définition de l'invention. Il comprend avantageusement un loquet amovible. Un loquet spécialement avantageux comprend une plaquette percée de deux ouvertures, qui sont traversées respectivement par deux tenons dont l'un est solidaire du bras et dont l'autre est solidaire du longeron vertical du support en L. Dans cette forme de réalisation de l'invention, le loquet doit être conçu pour qu'en position de fermeture, l'écart entre le bras et le longeron vertical du support soit compatible avec un serrage efficace du paquet de feuilles rigides entre le bras et le longeron vertical du support en L En variante, le loquet peut être remplacé par un ressort.

Dans l'organe de ceinturage selon l'invention, l'articulation du bras au longeron horizontal du support en L comprend une bielle dont une extrémité est articulée à l'extrémité inférieure du bras et l'autre extrémité est articulée au longeron horizontal du support en L. Les articulations de la bielle au bras et au longeron horizontal ne sont pas critiques pour la définition de l'invention. On utilise avantageusement des pivots et il est recommandé de concevoir ceux-ci de telle sorte que la bielle et le bras soient déplaçables autour desdits pivots, dans l'espace géométrique délimité par les deux longerons du support en L. Selon l'invention, il est généralement nécessaire que l'écart entre le longeron vertical du support en L et le pivot reliant la bielle au longeron horizontal dudit support soit compatible avec l'épaisseur du paquet de feuille. En pratique, cet écart est de préférence au moins égal et de préférence supérieur à l'épaisseur du paquet de feuilles. Dans le cas où il est supérieur à l'épaisseur du paquet de feuilles de verre, ledit écart ne peut pas excéder la somme de l'épaisseur du paquet de feuilles et de la longueur de la bielle. Ledit écart est de préférence sensiblement égal à ladite somme et, dans cette forme d'exécution préférée, il est avantageux que la longueur de la bielle soit sensiblement égale à l'épaisseur du paquet de feuilles rigides.

Selon l'invention, la bielle permet d'écarter largement le bras, du longeron vertical du support en L, facilitant ainsi l'introduction d'un paquet de feuilles sur le support en L. La bielle facilite en outre la prise du paquet de feuilles en sandwich entre le bras et le longeron vertical du support en L et assure ainsi un ceinturage optimum du paquet de feuilles.

Dans une première forme d'exécution particulière et avantageuse de l'organe de ceinturage décrit plus haut, le longeron horizontal du support en L comprend un profilé en U, dans lequel la bielle est escamotable. Cette forme de réalisation renforce le ceinturage du paquet de feuilles entre le longeron vertical du support en L et le bras.

Dans la première forme de réalisation particulière qui vient d'être décrite, l'organe de ceinturage selon l'invention comprend avantageusement un loquet amovible pour attacher la partie supérieure du bras au longeron vertical du support. Le loquet est normalement conçu de telle sorte qu'en position de fermeture, le bras soit sensiblement parallèle au longeron vertical du support en L. Des informations complémentaires concernant ce loquet sont fournies plus haut.

Dans une deuxième forme de réalisation particulière de l'invention, qui est préférée, l'organe de ceinturage comprend, d'une part, plusieurs bras et, d'autre part, plusieurs bielles qui sont articulées l'une derrière l'autre au longeron horizontal du support et qui relient respectivement les bras audit longeron horizontal. Dans cette forme de réalisation de l'invention, l'écart entre les pivots reliant les bielles au longeron horizontal est sensiblement égal à l'épaisseur des paquets de feuilles. L'écart entre le longeron vertical du support, d'une part, et le pivot reliant le longeron horizontal à la bielle qui est le plus proche du longeron vertical, d'autre part, doit être au moins égal à l'épaisseur du paquet de feuilles. Il est de préférence égal à la somme de cette épaisseur et de la longueur de cette bielle.

Dans la forme de réalisation qui vient d'être définie, il est préférable que toutes les bielles aient la même longueur.

Dans un mode d'exécution préféré de la deuxième forme de réalisation qui vient d'être décrite, le longeron horizontal du support en L comprend un profilé en U dans lequel les bielles sont escamotables.

Dans la deuxième forme de réalisation décrite plus haut et son mode d'exécution préféré, les bras peuvent avantageusement être équipés de loquets amovibles à leur partie supérieure, pour les attacher en chaîne les uns aux autres et au longeron vertical du support en U. Ces loquets peuvent être du type de celui décrit plus haut et comprendre une plaquette percée de deux ouvertures, qui sont respectivement traversées par deux tenons respectivement solidaires de deux bras consécutifs.

La deuxième forme de réalisation, ses variantes et son mode d'exécution préféré permettent le ceinturage de plusieurs paquets de feuilles rigides dans un même organe de ceinturage. Elle facilite et accélère le ceinturage des paquets tout en réduisant l'encombrement nécessaire pour positionner successivement les paquets de feuilles rigides sur le longeron horizontal du support en L et les prendre successivement en sandwich en le longeron vertical dudit support et les bras successifs.

Dans une troisième forme de réalisation particulière de l'organe de ceinturage selon l'invention, le longeron horizontal du support en L porte une semelle en une matière élastomère et le longeron vertical du support en L et le ou chaque bras portent au moins une bande en une matière élastomère, sur leur face destinée à venir en contact avec le ou chaque paquet de feuilles. Dans cette forme de réalisation de l'invention, la semelle et les bandes en matière élastomère servent à éviter que le ou chaque paquet de feuilles soit dégradé par abrasion au contact du support en L et des bras.

Dans une quatrième forme de réalisation de l'organe de ceinturage selon l'invention, une béquille escamotable est fixée transversalement au longeron horizontal du support. Cette béquille a pour fonction de retenir l'organe de ceinturage en position oblique pendant son stockage et de réduire ainsi son encombrement.

En variante, le longeron horizontal du support en L peut avantageusement être pourvu de galets destinés à faciliter son déplacement sur le sol. Les galets sont de préférence positionnés de manière à ne prendre appui sur le sol qu'après une inclinaison substantielle du support en L, la béquille étant alors escamotée. Un timon peut avantageusement être prévu, pour faciliter le déplacement du support sur ses galets.

L'organe de ceinturage selon l'invention trouve une application pour le ceinturage d'un ou de plusieurs paquets de feuilles rigides en position sensiblement verticale dans un véhicule. Dans une forme de réalisation particulière de l'invention, spécialement adaptée à cette application, le longeron horizontal du support en L est muni d'un organe de fixation amovible au plancher dudit véhicule. L'organe de fixation amovible peut par exemple comprendre un oeillet percé à travers le longeron horizontal du support en L et destiné à être traversé par une cheville ou un moyen de fixation analogue au plancher susdit.

Comme il vient d'être expliqué, l'organe de ceinturage selon l'invention trouve une application pour le ceinturage d'un ou de plusieurs paquets de feuilles rigides en position sensiblement verticale dans un véhicule.

L'invention concerne dès lors également un dispositif pour la manutention d'au moins un paquet de feuilles rigides, ledit dispositif comprenant au moins deux organes de ceinturage conformes à l'invention, tels que définis plus haut.

Le dispositif de manutention selon l'invention est spécialement adapté à la manutention de paquets de feuilles dont la longueur excède 50 cm et est généralement au moins égale à 1,5 m et souvent supérieure à 2 m. Il est spécialement adapté au transport de tels paquets de feuilles rigides sur la plate-forme d'un camion plat ou d'un wagon ferroviaire, dans la cale d'un cargo ou d'une péniche ou dans la soute d'un avion. Dans le dispositif selon l'invention, les deux organes de ceinturages doivent être position pour éviter une déformation par cintrage des feuilles rigides. A cet effet, les longerons horizontaux de ses organes de ceinturage sont avantageusement munis de moyens de fixation (de préférence amovible) au véhicule de transport utilisé.

Le dispositif de manutention selon l'invention est spécialement indiqué pour le transport de paquets de feuilles de verre plane ou cintrées, utilisées dans l'industrie du bâtiment.

L'invention concerne dès lors également une palette de feuilles rigides, comprenant une pluralité de paquets desdites feuilles en position sensiblement verticale sur un dispositif de manutention conforme à l'invention. L'invention concerne tout spécialement une palette de ce type, dans laquelle les feuilles rigides sont des feuilles de verre planes, destinées à l'industrie du bâtiment.

L'invention s'applique à tout type de feuilles rigides, planes ou cintrées, telles que des planches en bois, des feuillards métalliques, des feuilles rigides en polymère de synthèse ou des feuilles de verre. Des exemples de feuilles rigides en polymère de synthèse auxquelles l'invention s'applique comprennent des feuilles minces en polychlorure de vinyle, des panneaux d'isolation pour le bâtiment, en mousse de polyuréthane ou de polyisocyanate ou en polystyrène expansé.

L'invention trouve une application intéressante dans l'industrie verrière et dans l'industrie du bâtiment, pour la manutention de feuilles de verre.

### Brève description des figures

Des particularités et détails de l'invention vont apparaître au cours de la description suivante des figures annexées, qui représentent quelques formes de réalisation particulière de l'invention.
La figure 1 est une vue schématique en élévation d'un organe de ceinturage non conforme à l'invention ;
La figure 2 est une vue schématique en élévation d'une première forme de réalisation de l'organe de ceinturage selon l'invention ;
La figure 3 montre l'organe de ceinturage de la figure 2, ceinturant un paquet de feuilles rigides ;
La figure 4 est une vue schématique en élévation d'une forme de réalisation préférée de l'organe de ceinturage selon l'invention ;
La figure 5 montre l'organe de ceinturage de la figure 4, en position de ceinturage de plusieurs paquets de feuilles rigides ;
La figure 6 montre en perspective une variante d'exécution de la forme de réalisation des figures 4 et 5 ; et
La figure 7 montre en perspective une forme de réalisation particulière du dispositif de manutention selon l'invention.

Les figures ne sont pas dessinées à l'échelle.

Généralement, les mêmes numéros de référence désignent les mêmes éléments.

### Description détaillée de modes de réalisation particuliers

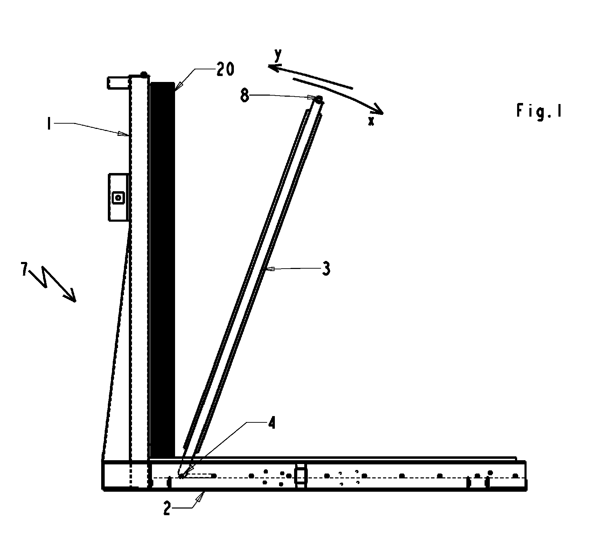

L'organe de ceinturage représenté schématiquement à la figure 1 est destiné au ceinturage d'un paquet de feuilles de verre, destinées à l'industrie du bâtiment. Il comprend un support en L désigné dans son ensemble par le numéro de référence 7. Le support en L 7 est formé d'un longeron vertical 1 et d'un longeron horizontal 2. Les longerons 1 et 2 sont des profilés en acier, par exemple des poutrelles de section transversale en U. Les poutrelles 1 et 2 sont soudées perpendiculairement l'une à l'autre. Un bras 3 en acier (par exemple un profilé de section transversale en U ou en H) est attaché au longeron horizontal 2 au moyen d'un pivot 4. L'écart entre le pivot 4 et le longeron vertical 1 est sensiblement égal ou légèrement supérieur à l'épaisseur du paquet de feuilles de verre à ceinturer. Le bras 3 peut pivoter librement sur le pivot 4, dans l'espace géométrique délimité par les deux longerons 1 et 2. Il peut ainsi pivoter entre une position sensiblement horizontale et une position sensiblement verticale pour laquelle son extrémité supérieure 8 est appliquée contre le longeron vertical 1. En position horizontale, le bras 3 s'escamote dans l'espace délimité entre les ailes latérales de la poutrelle en U 2.

Pour ceinturer un paquet de feuilles de verre dans le dispositif de la figure 1, on fait d'abord pivoter le bras 3 dans le sens de la flèche X, pour l'amener en position sensiblement horizontale. On dépose ensuite le paquet de feuilles de verre 20 verticalement sur le longeron horizontal 2, entre le longeron vertical 1 et le pivot 4, puis on fait pivoter le bras 3 dans le sens de la flèche Y pour le rabattre contre le paquet de feuilles 20. On attache ensuite fermement l'extrémité supérieure 8 du bras 3 au longeron vertical 1, de manière que le paquet de feuilles 20 soit pris en sandwich entre le longeron vertical 1 et le bras 3.

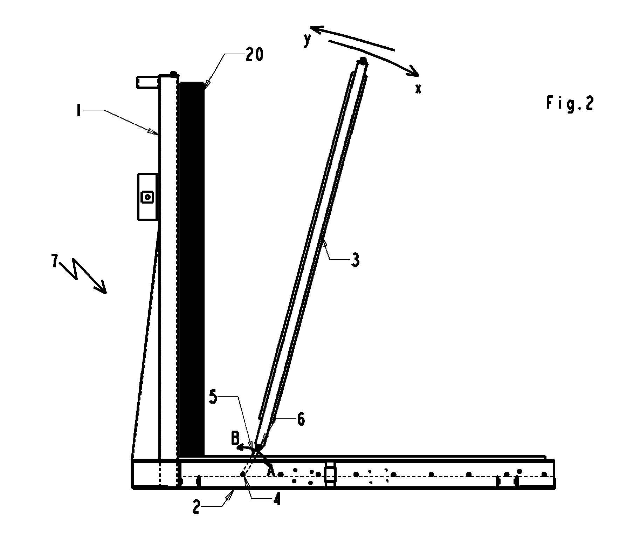

Dans l'organe de ceinturage de la figure 2, conforme à l'invention, une bielle 5 relie le bras 3 au pivot 4. La bielle est attachée au bras 3 au moyen d'un pivot 6. Les pivots 4 et 6 sont agencés pour permettre à la bielle 5 et au bras 3 de se déplacer dans l'espace géométrique défini par les longerons 1 et 2. L'écart entre le longeron vertical 1 et le pivot 4 est sensiblement égal à la longueur de la bielle 5, augmentée de l'épaisseur de paquet de feuilles de verre à ceinturer.

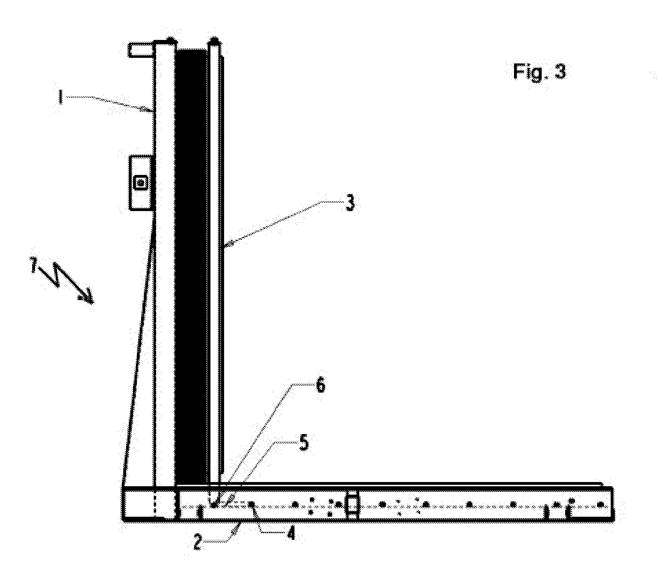

Pour ceinturer un paquet de feuilles de verre dans le dispositif de la figure 2, on fait basculer la bielle 5 sur son pivot dans le sens de la flèche A et on fait basculer le bras 3 sur son pivot 6 dans le sens de la flèche X. La bielle 5 s'escamote dans l'espace délimité entre les ailes de la poutrelle en U 2. On pose ensuite le paquet de feuilles 20 sur le longeron horizontal 2, de manière qu'il prenne appui contre le longeron vertical 1, puis on fait basculer la bielle 5 et le bras 3 sur les pivots 4 et 6, dans le sens des flèches B et Y respectivement. A l'issue de sa rotation dans le sens de la flèche B, la bielle 5 s'escamote dans l'espace délimité entre les ailes latérales de la poutrelle en U 2 et le paquet de feuilles 20 est pris en sandwich entre le bras 3 et le longeron vertical 1 (Figure 3).

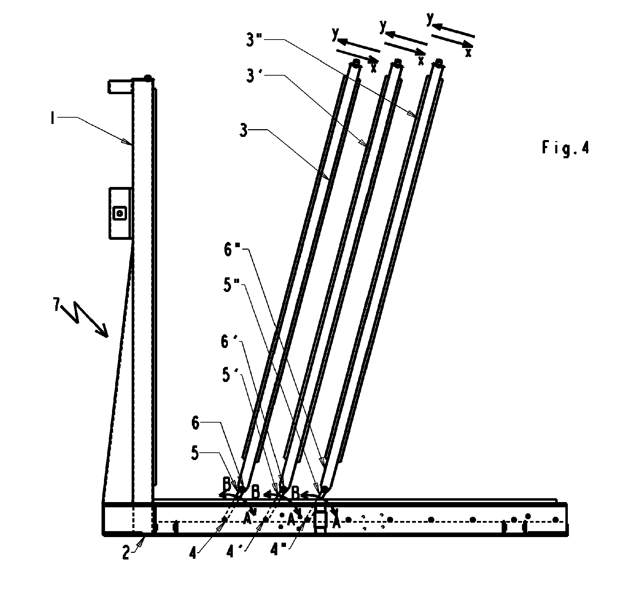

L'organe de ceinturage de la figure 4 est conçu pour ceinturer trois paquets de feuilles de verre. A cet effet, il comprend trois bras 3, 3', 3" et trois bielles 5, 5', 5" reliant respectivement les bras 3, 3' et 3" au longeron horizontal 2. Les bras 3, 3', 3" et leurs bielles respectives 5, 5', 5" sont similaires au bras 3 et à la bielle 5 de l'organe de ceinturage des figures 2 et 3. Le longeron 2 est constitué d'une poutrelle en U comme exposé plus haut pour les organes de ceinturage des figures 1, 2 et 3.

L'écart entre le longeron vertical 1 et le premier pivot 4 est sensiblement égal à la longueur de la bielle 5, augmentée de l'épaisseur de paquet de feuilles de verre à ceinturer. L'écart entre le pivot 4 et le pivot 4' et l'écart entre le pivot 4' et le pivot 4" sont légèrement supérieure à la longueur des bielles 5, 5' et 5" (qui ont toutes les trois sensiblement la même longueur.

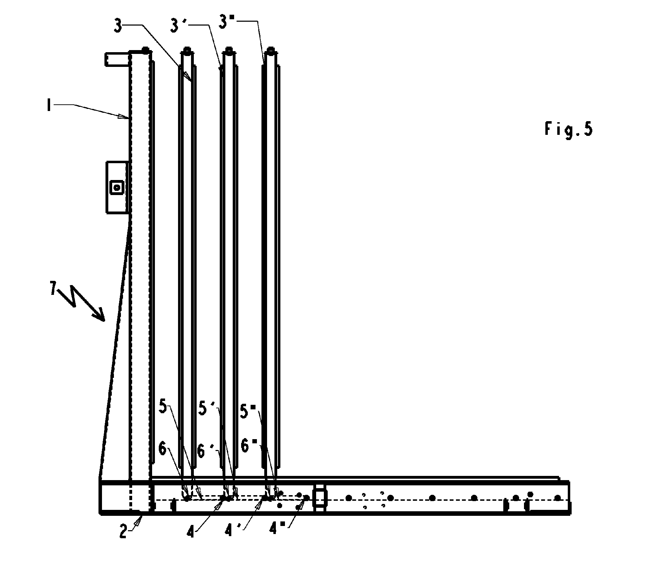

Pour ceinturer trois paquets de feuilles de verre dans l'organe de ceinturage de la figure 4, on commence par basculer les bielles 5, 5', 5" et les bras 3, 3', 3" dans le sens des flèches A et X pour les rabattre contre le longeron 2. On dépose ensuite un premier paquet de feuilles de verre verticalement sur le longeron 2, entre le longeron vertical 1 et le pivot 4 de la bielle 5. On fait ensuite basculer la bielle 5 et le bras 3 sur les pivots 4 et 6, dans le sens des flèches B et Y respectivement. A l'issue de sa rotation dans le sens de la flèche B, la bielle 5 s'escamote dans l'espace délimité entre les ailes latérales de la poutrelle en U 2 et le paquet de feuilles (non représenté) qui prend appui verticalement contre le longeron vertical 1 est pris en sandwich entre le bras 3 et ce longeron vertical 1 (Figure 5). On dépose ensuite un deuxième paquet de feuilles de verre verticalement sur le longeron horizontal 2, entre le pivot 4 de la bielle 5 et le pivot 4' de la bielle 5'. Puis, on bascule le bras 3' et sa bielle 5' dans le sens des flèches Y et B. La bielle 5' s'escamote entre les ailes latérales de la poutrelle en U 2 et le paquet de feuilles (non représenté) qui prend appui verticalement contre le bras vertical 3 est pris en sandwich entre ce bras 3 et le bras 3'. On dépose alors le troisième paquet de feuilles de verre verticalement sur le longeron 2, entre le pivot 4' de la bielle 5' et le pivot 4" de la bielle 5". Puis on bascule le bras 3" et sa bielle 5" dans le sens des flèches B et Y respectivement. La bielle 5" s'escamote entre les ailes latérales de la poutrelle en U 2 et le paquet de feuilles (non représenté) qui prend appui verticalement contre le bras vertical 3' est pris en sandwich entre ce bras 3' et le bras 3". A l'issue du rabattement du bras 3" dans le sens de la flèche Y, on obtient l'agencement représenté à la figure 5 où les trois paquets de feuilles de verre (non représentés) sont pris en sandwich successivement entre le longeron vertical 1 et les trois bras 3, 3' et 3".

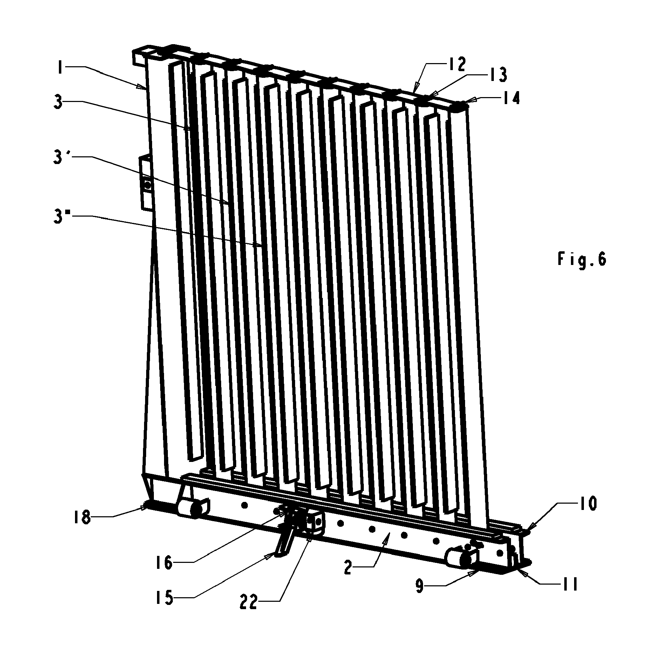

Dans l'organe de ceinturage de la figure 6, le longeron horizontal 2 est formé de l'assemblage de deux poutrelles 9 et 10, qui sont soudées aux ailes d'une poutrelle en T 11. L'espace délimité entre les deux poutrelles 9 et 10, reçoit les bielles 5, 5' et 5" lorsque celles-ci pivotent dans le sens des flèches B de la figure 4 et s'escamotent dans le longeron horizontal 2. A leurs extrémités, les bras 9 et 10 sont percées d'oeillets 18 pour le passage de chevilles ou de boulons de fixation desdites bras au plancher d'un véhicule de transport (non représenté).

L'organe de ceinturage de la figure 6 est équipé de loquets 12, destinés à solidariser les bras 3, 3', 3", ..., lorsque ceux-ci sont rabattus en position verticale. Les loquets 12 comprennent une succession de plaquettes qui sont percées d'ouvertures traversées par des tenons 13 solidaires des bras 3, 3', 3", ... Des clavettes 14 assurent le maintien des plaquettes 12 sur les tenons 13.

L'organe de ceinturage de la figure 6 comprend une béquille 15, fixée à la poutrelle 10 du longeron horizontal 2. La béquille 15 sert à maintenir le support en L 7 en position sensiblement verticale ou oblique, en empêchant qu'il se renverse. La fixation de la béquille 15 au longeron 2 comprend un pivot 16, permettant de l'escamoter. L'organe de ceinturage comprend en outre une paire de galets 19 et une patte 22 pour la fixation temporaire d'un timon (non représenté). Après avoir escamoté la béquille 15, il est ainsi possible de déplacer le support en L 7 en le faisant rouler sur ses galets 19 et en le guidant au moyen du timon précité.

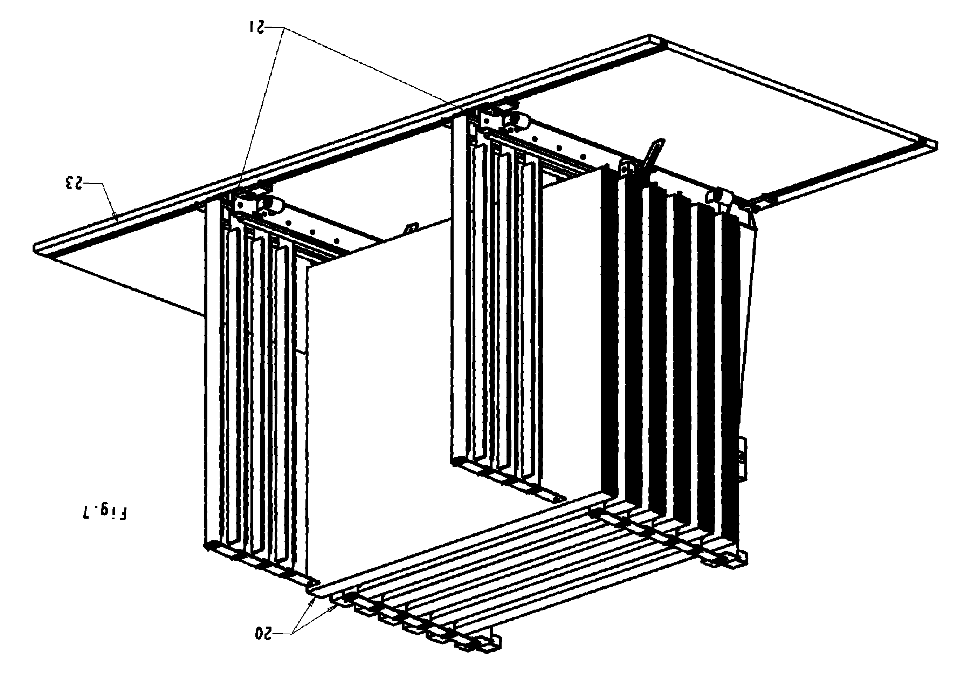

La figure 7 montre un dispositif conforme à l'invention, pour le transport de paquets de feuilles de verre dans un camion ou un autre véhicule de transport. Ce dispositif comprend deux organes de ceinturage 21 du type de celui représenté à la figure 6, qui sont espacés d'une distance définie, légèrement inférieure à la longueur des paquets de feuilles de verre. Les deux organes de ceinturage 21 sont fixés solidement au plancher 23 d'un camion (ou d'un autre véhicule de iransport). Six paquets de feuilles de verre 20 sont ceinturés dans les organes de ceinturage 21, de la manière qui a été exposée plus haut en référence aux figures 4 et 5.

L'ensemble constitué des deux organes de ceinturage 21 et des six paquets de feuilles de verre 20 constitue une palette de feuilles de verre, conforme à l'invention.

## Revendications

1. Organe de ceinturage d'au moins un paquet de feuilles rigides, comprenant, d'une part, un support en L qui comprend un longeron sensiblement horizontal et un longeron sensiblement vertical et, d'autre part, au moins un bras mobile sur ledit support, **caractérisé en ce que** le bras est articulé au longeron horizontal du support et qu'une articulation du bras au longeron horizontal comprend une bielle.

2. Organe selon la revendication 1, **caractérisé en ce que** la bielle est attachée au longeron horizontal et à l'extrémité inférieure du bras, respectivement par deux pivots, de telle sorte que la bielle et le bras soient déplaçables autour desdits pivots, dans l'espace géométrique délimité par les deux longerons du support en L.

3. Organe selon la revendication 2, **caractérisé en ce que** l'écart entre le longeron vertical du support et le pivot reliant la bielle au longeron horizontal est au moins égal à l'épaisseur du paquet de feuilles.

4. Organe selon la revendication 3, **caractérisé en ce que** l'écart entre le longeron vertical du support et le pivot reliant la bielle au longeron horizontal est sensiblement égal à l'épaisseur du paquet de feuilles, augmentée de la longueur de la bielle.

5. Organe selon la revendication 4, **caractérisé en ce que** la longueur de la bielle est sensiblement égale à l'épaisseur du paquet de feuilles.

6. Organe selon l'une quelconque des revendications 1 à 5, **caractérisé en ce que** le longeron horizontal du support en L comprend un profilé en U dans lequel la bielle est escamotable.

7. Organe selon l'une quelconque des revendications 1 à 6, **caractérisé en ce qu'**il comprend en outre un loquet amovible pour attacher la partie supérieure du bras au longeron vertical du support.

8. Organe selon la revendication 7, **caractérisé en ce que** le loquet est conçu pour qu'en position de fermeture, l'écart entre la partie supérieure du bras et le longeron vertical du support soit sensiblement égal à l'épaisseur du paquet de feuilles.

9. Organe selon la revendication 7 ou 8, **caractérisé en ce que** le loquet comprend une plaquette percée de deux ouvertures, qui sont traversées respectivement par deux tenons dont l'un est solidaire du longeron vertical du support et dont l'autre est solidaire du bras.

10. Organe selon l'une quelconque des revendications 2 à 5, **caractérisé en ce que**, dans le cas du ceinturage de plusieurs paquets de feuilles rigides, il comprend, d'une part, plusieurs bras et, d'autre part, plusieurs bielles qui sont articulées l'une derrière l'autre au longeron horizontal du support et qui relient respectivement les bras audit longeron horizontal et **en ce que** l'écart entre les pivots reliant les bielles au longeron horizontal est sensiblement égal à l'épaisseur de chaque paquet de feuilles.

11. Organe selon la revendication 10, **caractérisé en ce que** l'écart entre le longeron vertical du support, d'une part, et le pivot reliant le longeron horizontal à la bielle qui est le plus proche du longeron vertical, d'autre part, est sensiblement égal à l'épaisseur du paquet de feuilles, augmentée de la longueur de la bielle.

12. Organe selon la revendication 10 ou 11, **caractérise en ce que** les bielles ont toutes sensiblement la même longueur.

13. Organe selon l'une quelconque des revendications 10 à 12, **caractérisé en ce que** le longeron horizontal du support en L comprend un profilé en U dans lequel les bielles sont escamotables.

14. Organe selon l'une quelconque des revendications 10 à 13, **caractérisé en ce que** les bras sont équipés de loquets amovibles à leur partie supérieure, pour les attacher en chaîne les uns aux autres et au longeron vertical du support en L.

15. Organe selon la revendication 12, **caractérisé en ce que** les loquets comprennent chacun une plaquette percée de deux ouvertures, qui sont traversées respectivement par deux tenons respectivement solidaires de deux bras consécutifs.

16. Organe selon l'une quelconque des revendications 1 à 15, **caractérisé en ce que** le longeron horizontal du support en L porte une semelle en une matière élastomère et **en ce que** le longeron vertical du support en L et le ou chaque bras portent au moins une bande en une matière élastomère, sur leur face destinée à venir en contact avec le paquet de feuilles.

17. Organe selon l'une quelconque des revendications 1 à 16, **caractérisé en ce que** le longeron horizontal du support en L est muni d'un organe de fixation amovible à un plancher.

18. Organe selon la revendication 17, **caractérisé en ce que** l'organe de fixation amovible comprend un oeillet percé à travers le longeron inférieur du support et destiné à coopérer avec une cheville de fixation au plancher précité.

19. Organe selon l'une quelconque des revendications 1 à 18, **caractérisé en ce qu'**une béquille escamotable est fixée au longeron horizontal du support.

20. Organe selon l'une quelconque des revendications 1 à 19, **caractérisé en ce qu'**une paire de galets sont fixés au longeron horizontal du support, ainsi qu'un timon de manoeuvre dudit support.

21. Organe selon l'une quelconque des revendications 1 à 20, **caractérisé en ce que** le ou chaque paquet de feuilles rigides comprend un paquet de feuilles de verre.

22. Dispositif pour la manutention d'au moins un paquet de feuilles rigides, comprenant au moins deux organes de ceinturage dudit paquet, **caractérisé en ce que** les deux organes de ceinturage sont conformes à l'une quelconque des revendications 1 à 21.

23. Dispositif selon la revendication 22, **caractérisé en ce que** ce que, dans le cas d'une pluralité de paquets de feuilles, chacun des deux organes de ceinturage est conforme à l'une quelconque des revendications 10 à 20.

24. Palette de feuilles rigides, comprenant une pluralité de paquets desdites feuilles en position verticale sur un dispositif de manutention conforme à la revendication 23.

25. Palette selon la revendication 24, **caractérisée en ce que** les feuilles rigides sont des feuilles de verre planes destinées à l'industrie du bâtiment.
